# EUROPÄISCHE PATENTANMELDUNG

(11) **EP 3 366 172 A1**
(43) Veröffentlichungstag der Anmeldung: **29.08.2018**
(21) Anmeldenummer: 18153002.3
(22) Anmeldetag: 23.01.2018
(51) Int. Cl.: A47J 31/52

(54) **TEEAUTOMAT UND VERFAHREN ZUR STEUERUNG EINES TEEAUTOMATEN**

(30) Priorität: 28.02.2017 DE 102017104117
(71) Anmelder: Vorwerk & Co. Interholding GmbH, 42275 Wuppertal (DE)
(72) Erfinder: Hahn, Pia, 58332 Schwelm (DE); Bapat, Aniket, 408882 Ratingen (DE); Tamm, Steffen, 40219 Düsseldorf (DE); Groom, Sascha, 48607 Ochtrup (DE); Zils, Jürgen, 51399 Burscheid (DE)
(74) Vertreter: Cohausz & Florack

(57) **Zusammenfassung**

Ein Teeautomat (2) eingerichtet zur automatischen Zubereitung von Teegetränken mit mindestens einer Brühkammer (4) und mit einer Steuereinrichtung (6) weist ein Kommunikationsmodul (8) zur Kommunikation mit einer tragbaren Benutzerschnittstelle (10) auf. Die Benutzerschnittstelle (10) ist dazu eingerichtet, mindestens eine Gesundheitseigenschaft mindestens eines Nutzers zu erfassen. Die Steuereinrichtung (6) ist dazu eingerichtet, die Einstellung von mindestens einem Zubereitungsparameter für die Zubereitung des Teegetränks in Abhängigkeit der mindestens einen erfassten Gesundheitseigenschaft zu steuern. Beschrieben wird auch ein Verfahren zur Steuerung eines Teeautomaten (2), bei dem Gesundheitseigenschaften mittels einer tragbaren Benutzerschnittstelle (10) erfasst und bei der Zubereitung von Teegetränken berücksichtigt werden.

## Beschreibung

Die Erfindung betrifft einen Teeautomaten eingerichtet zur automatischen Zubereitung von Teegetränken mit mindestens einer Brühkammer und mit einer Steuereinrichtung. Weiterhin betrifft die Erfindung ein Verfahren zur Steuerung eines Teeautomaten.

Es sind Getränkeautomaten bekannt, mit denen warme Getränke automatisch zubereitet werden können. Zubereitungsparameter wie die Sorte, die Menge oder die Stärke eines Getränks können eingestellt werden. Oft müssen die Zubereitungsparameter manuell an dem Getränkeautomaten eingegeben werden. Manche Getränkeautomaten sind mit einer Auswahl an Zubereitungsparametersätzen vorprogrammiert, aber diese Auswahl ist in den meisten Fällen begrenzt. Wenn ein gewünschtes Getränk nicht zu der Auswahl gehört, müssen die entsprechenden Zubereitungsparameter aufwändig eingegeben werden. Dies erweist sich oft als fehlerträchtig.

Die vorprogrammierte Einstellung der bekannten Getränkeautomaten gestattet in den meisten Fällen nicht, das Befinden oder die Vorlieben eines Nutzers zum Zeitpunkt der Zubereitung automatisch zu berücksichtigen. Weiterhin erfordert die manuelle Einstellung von Zubereitungsparametern fortgeschrittene Kenntnisse des Nutzers bezüglich der Zutaten und der Zubereitung des gewünschten Getränks. Wenn der Nutzer diese Kenntnisse nicht hat, kann es dazu führen, dass das zubereitete Getränk den Erwartungen des Nutzers nicht entspricht.

Die Komplexität der Eingabe am Getränkeautomaten und die oft fehlerträchtige Ausgabe führen zur Unzufriedenheit des Nutzers.

Der Erfindung liegt demnach die Aufgabe zugrunde, das Befinden eines Nutzers bei der Zubereitung eines Teegetränks zu berücksichtigen und die Einstellung von Zubereitungsparametern eines Teeautomaten zu vereinfachen.

Die Aufgabe wird erfindungsgemäß durch einen Teeautomaten eingerichtet zur automatischen Zubereitung von Teegetränken mit mindestens einer Brühkammer und mit einer Steuereinrichtung gelöst, wobei mindestens ein Kommunikationsmodul zur Kommunikation mit mindestens einer tragbaren Benutzerschnittstelle vorgesehen ist, wobei die Benutzerschnittstelle dazu eingerichtet ist, mindestens eine Gesundheitseigenschaft mindestens eines Nutzers zu erfassen und die Steuereinrichtung dazu eingerichtet ist, die Einstellung von mindestens einem Zubereitungsparameter für die Zubereitung des Teegetränks in Abhängigkeit der mindestens einen erfassten Gesundheitseigenschaft zu steuern.

Unter dem Begriff Teegetränke sind Getränke zu verstehen, die auf Basis eines Aufgusses fester pflanzlicher Zutaten zubereitet sind. In den meisten Fällen erfolgt der Aufguss mit heißem Wasser. Teegetränke können warm oder kalt ausgegeben werden, je nach Temperatur des Wassers beim Aufguss und Abkühlzeit. Die festen pflanzlichen Zutaten können lose Teeblätter, Blüten oder ähnliches sein, die frisch oder getrocknet verwendet werden. Eine Sorte von festen pflanzlichen Zutaten ergibt bei der Zubereitung ein Teegetränk mit einer bestimmten Koffeinkonzentration. Weitere Zutaten können für die Zubereitung eingesetzt werden, wie zum Beispiel Milch oder Zucker.

Die Parameter, die für die Zubereitung von Teegetränken ausgewählt werden müssen, sind Zubereitungsparameter. Zu Zubereitungsparametern zählen zum Beispiel die Sorte (z. B. die Sorte der festen pflanzlichen Zutat), die Temperatur, die Stärke und die Menge des Teegetränks. Die Temperatur kann die Temperatur des Wassers beim Aufguss (Brühtemperatur) und/oder die Temperatur des Teegetränks bei der Ausgabe sein. Von einer Sorte einer festen pflanzlichen Zutat hängen mehrere Zubereitungsparameter (z. B. Brühtemperatur und Wassermenge) ab, womit optimale Zubereitungsbedingungen erfüllt werden können. Die Stärke des Teegetränks ist von der Ziehzeit abhängig. Mehrere Zubereitungsparameter bilden einen Zuberei tungsparametersatz.

Der Teeautomat verfügt über eine Brühkammer, in der die feste Zutat aufgegossen und dann während einer bestimmten Ziehzeit gebrüht wird. Die Brühkammer kann aus verschiedenen Materialien hergestellt sein, wie zum Beispiel Glas, Metall oder zu hohen Temperaturen widerstandsfähiger Kunststoff. Die Brühkammer kann doppelwandig sein, um das Teegetränk von der Umgebung thermisch zu isolieren. Dadurch kann das Teegetränk für längere Zeit nach der Zubereitung warm gehalten werden. Die Brühkammer kann auch heizbar sein, zum Beispiel durch Induktion oder direkte Heizung.

Die Steuereinrichtung dient der Steuerung des Teeautomaten, so dass die Zubereitung maschinell erfolgen kann. Der Teeautomat kann dank der Steuereinrichtung auf beliebige Zubereitungsparameter eingestellt werden. Die Steuereinrichtung kann zudem einen Informationsträger aufweisen. Dadurch können Zubereitungsparameter gespeichert und somit der Teeautomat bei wiederholten Zubereitungen auf die gleichen Zubereitungsparameter eingestellt werden. Eine Datenbank von Zubereitungsparametern und Schwellenwerten kann auch in dem Informationsträger gespeichert sein.

Vorzugsweise ist die mindestens eine Gesundheitseigenschaft mindestens eine Information über die Herzfrequenz und/oder den Blutdruck und/oder die Atmung. Dank einer Übertragung der Herzfrequenz und/oder des Blutdrucks zu der Steuereinrichtung können die Zubereitungsparameter so eingestellt werden, dass die Stärke und die Koffeinkonzentration des auszugebenden Teegetränks an die erfasste Herzfrequenz und/oder den erfassten Blutdruck des Nutzers angepasst ist. Wenn die Herzfrequenz hoch ist (beispielsweise über 120 Schläge/min), können die Zubereitungsparameter für die Zubereitung eines Teegetränks mit niedriger Koffeinkonzentration eingestellt werden. Dies wäre auch für einen hohen erfassten Blutdruck (beispielsweise für einen systolischen Wert über 140 mmHg) vorstellbar.

Weiterhin kann die mindestens eine Gesundheitseigenschaft mindestens eine Information über Temperatur und/oder Körperaktivität sein. Die Körperaktivität weist dabei insbesondere Daten zur Frequenz der Atmung auf. An die Temperatur und die Körperaktivität des Nutzers können die Temperatur des Teegetränks bei der Ausgabe, sowie eine Sorte und/oder eine Stärke angepasst werden. Für eine schwache Körperaktivität und eine niedrige Körpertemperatur, wäre ein Teegetränk mit erhöhter Ausgabetemperatur und Koffeinkonzentration angebracht. Wenn die erfasste Körperaktivität hoch ist, liegt dann ein Interesse des Nutzers an einem durstlöschenden Teegetränk mit niedriger Ausgabetemperatur vor.

Die erfassten Gesundheitseigenschaften können auch das Alter, das Körpergewicht des Nutzers, eine Anzahl an Schritten, Informationen über eine Krankheit und/oder Empfehlungen eines Ernährungsprogramms sein.

Schwellenwerte für Herzfrequenz, Blutdruck, Temperatur und Körperaktivität können gespeichert werden, so dass die Einstellung der Zubereitungsparameter in Abhängigkeit von einem Vergleich zwischen den gespeicherten Schwellenwerten und den erfassten Gesundheitseigenschaften erfolgen kann. Die Schwellenwerte können in der Benutzerschnittstelle und/oder dem Teeautomaten gespeichert werden. Weiterhin können die Schwellenwerte von dem Nutzer eingegeben werden. Auf diese Weise kann der Nutzer nach Ausprobieren von Teegetränken, die mit verschiedenen Zubereitungsparametersätzen zubereitet worden sind, Schwellenwerte neu definieren und entsprechend individueller Kriterien wie seine Vorlieben, Gewohnheiten und/oder Gesundheitslage speichern.

Die oben aufgezeigte Aufgabe wird gemäß der vorliegenden Erfindung auch durch ein Verfahren zur Steuerung eines Teeautomaten, insbesondere eines erfindungsgemäßen Teeautomaten, gelöst, wobei mindestens eine Gesundheitseigenschaft mittels einer tragbaren Benutzerschnittstelle erfasst wird und zu dem Teeautomaten übertragen wird.

Die Erfassung der Gesundheitseigenschaften des Nutzers mittels der tragbaren Benutzerschnittstelle kann durch verschiedene Sensoren und Technologien gewährleistet werden, wie zum Beispiel GPS (Global Positioning System), Thermometer, Schrittmesser, Beschleunigungsmesser, LED-Sensoren, elektro-optische Linsen und/oder ähnliches. Die Benutzerschnittstelle weist vorzugsweise Prozessoren auf und unterstützt Computerprogramme, um die von den Sensoren gemessenen Signale auszuwerten. Die gemessenen Signale können dadurch in Gesundheitseigenschaften übersetzt werden.

Die Benutzerschnittstelle ist tragbar, so dass die Erfassung unabhängig von Ort und Zeit erfolgen kann. Dadurch kann das Befinden des Nutzers in realer Zeit bestimmt und aktualisiert werden. Weiterhin kann die Benutzerschnittstelle ein Kommunikationsmodul zur Kommunikation mit dem Teeautomaten aufweisen, insbesondere wenn die Kommunikation mit dem Kommunikationsmodul des Teeautomaten kabellos erfolgt. Gegebenenfalls kann die Kommunikation telemetrisch sein, beispielsweise über WLAN (wireless local area network), Bluetooth, RFID (radio-frequency identification) oder ähnliches. Die Benutzerschnittstelle kann eine Anzeigeeinrichtung aufweisen, so dass Gesundheitseigenschaften und/oder Zubereitungsparameter angezeigt werden können und somit dem Nutzer kommuniziert werden.

Die Kommunikation zwischen dem Teeautomaten und der Benutzerschnittstelle kann durch Einstecken mittels einer Kabelverbindung oder kabellos erfolgen (beispielsweise mittels Technologien wie WLAN -Wireless Local Area Network-, Bluetooth, RFID -Radio-Frequency Identification- oder ähnliches). Die Steuereinrichtung und das Kommunikationsmodul des Teeautomaten können verbunden sein, um die erfassten Gesundheitsdaten von der Benutzerschnittstelle zu der Steuereinrichtung zu übertragen. Dies schafft die Voraussetzungen für eine weitere Ausführung des Verfahrens, in dem mindestens ein Zubereitungsparameter für die Zubereitung eines Teegetränks in Abhängigkeit von der mindestens einen Gesundheitseigenschaft eingestellt wird. Dadurch können bei der Zubereitung Informationen über das Alter des Nutzers, eine Krankheit oder Empfehlungen eines Ernährungsprogramms berücksichtigt werden.

Vorzugsweise wird bei dem Verfahren mindestens ein Zubereitungsparameter entsprechend einer Information über eine Temperatur, eine Körperaktivität, den Blutdruck und/oder die Herzfrequenz eingestellt. Diese Gesundheitseigenschaften tragen zur Bestimmung des aktuellen Befindens des Nutzers bei. Deren Berücksichtigung ermöglicht die Anpassung der Eigenschaften des auszugebenden Teegetränks, wie zum Beispiel Ausgabetemperatur oder Koffeinkonzentration, an den Bedarf des Nutzers.

Das mindestens eine Kommunikationsmodul des Teeautomaten kann für eine bidirektionale Verbindung mit der mindestens einen Benutzerschnittstelle eingerichtet sein. Dadurch können die Benutzerschnittstelle und der Teeautomat sowohl empfangen als auch senden.

In einer weiteren Ausführung des Verfahrens wird mindestens ein Zubereitungsparameter von dem Teeautomaten zu der Benutzerschnittstelle übertragen. Wenn die Benutzerschnittstelle eine Anzeigeeinrichtung aufweist, kann auf diese Weise ein Vorschlag bezüglich Zubereitungsparameter von dem Teeautomaten dem Nutzer über die Benutzerschnittstelle entsprechend der erfassten Gesundheitsdaten kommuniziert werden. Der Vorschlag kann dank eines automatischen Vergleichs zwischen den erfassten Gesundheitsdaten und einer gespeicherten Datenbank (beispielsweise in der Steuereinrichtung des Teeautomaten oder in der Benutzerschnittstelle) entstehen. Wenn die Benutzerschnittstelle dazu eingerichtet ist, eine Nutzereingabe anzunehmen, kann der Benutzer den Vorschlag annehmen oder ablehnen. Dies ermöglicht, die Zubereitung eines Teegetränks entsprechend dem Befinden des Nutzers anzupassen, ohne dass der Nutzer sich fortschrittliche Kenntnisse über Teegetränke aneignen muss.

Im Folgenden werden bevorzugte Ausführungsbeispiele der Erfindung anhand der beigefügten Zeichnung näher erläutert. In der Zeichnung zeigen
- Fig. 1: ein erstes Ausführungsbeispiel eines erfindungsgemäßen Teeautomaten und
- Fig. 2: ein zweites Ausführungsbeispiel eines erfindungsgemäßen Teeautomaten

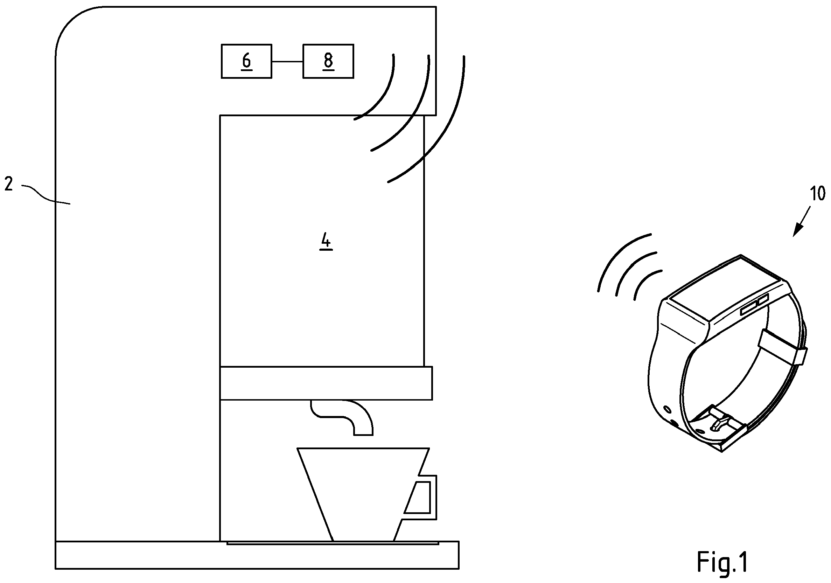

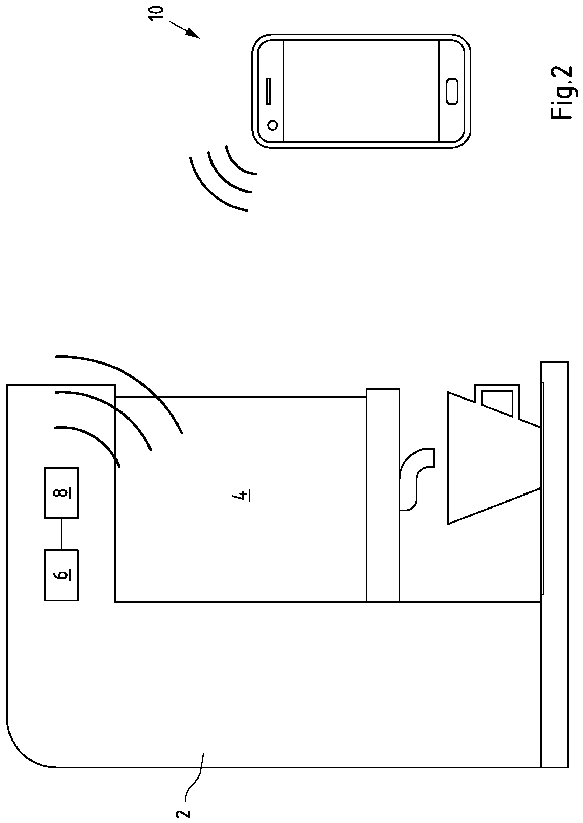

In den Fig. 1 und 2 sind Teeautomaten 2 eingerichtet zur automatischen Zubereitung von Teegetränken mit mindestens einer Brühkammer 4 und mit einer Steuereinrichtung 6 gezeigt, wobei ein Kommunikationsmodul 8 zur Kommunikation mit einer tragbaren Benutzerschnittstelle 10 vorgesehen ist. Die Benutzerschnittstelle 10 ist dazu eingerichtet, mindestens eine Gesundheitseigenschaft mindestens eines Nutzers zu erfassen. Die Steuereinrichtung 6 ist dazu eingerichtet, die Einstellung von mindestens einem Zubereitungsparameter für die Zubereitung des Teegetränks in Abhängigkeit der mindestens einen erfassten Gesundheitseigenschaft zu steuern. Die Benutzerschnittstelle 10 ist in Fig. 1 als Smartwatch und in Fig. 2 als Smartphone dargestellt. Weitere Ausgestaltungen der Benutzerschnittstelle 10 sind möglich, wie zum Beispiel in Form eines activity trackers oder anderer Ausgestaltungen von Applikationen zur Aufzeichnung und Versendung fitness- und gesundheitsrelevanter Daten.

Die Benutzerschnittstelle 10 ist dazu eingerichtet, Gesundheitsdaten von in der Benutzerschnittstelle 10 integrierten und/oder mit der Benutzerschnittstelle 10 verbundenen Sensoren zu erfassen.

Wenn die Benutzerschnittstelle 10 eine Smartwatch, ein activity tracker oder eine ähnliche Vorrichtung ist, können verschiedene Sensoren und Messeinrichtungen integriert sein. Beispielsweise können ein LED-Sensor und eine elektro-optische Linse vorgesehen sein, die ein Messsignal entsprechend des Blutdrucks des Nutzers erzeugen. Das Messsignal ist dann mittels eines Computer-Programms ausgewertet. Die körperliche Aktivität des Nutzers kann dank einer Analyse der von einem Schrittzähler, GPS oder Beschleunigungsmesser erzeugten Messsignale ermittelt werden. Sensoren, die Bewegungen, Herzfrequenz und/oder Blutdruck messen können, können auch Informationen über Energieumsatz oder Schlafqualität liefern. Die Körpertemperatur des Nutzers kann zusätzlich mit einem Thermometer oder einem wärmeempfindlichen Sensor gemessen werden.

In einem weiteren Ausführungsbeispiel kann die Benutzerschnittstelle 10 Messsignale oder bereits ausgewertete Gesundheitsdaten von nicht integrierten Sensoren und Messeinrichtungen erfassen. Die Messsignale werden zu der Benutzerschnittstelle 10 übertragen und dort zu Gesundheitsdaten umgewandelt. So können Gesundheitsdaten mittels am Körper des Nutzers getragenen Sensoren gemessen und im Anschluss von einem Smartphone erfasst werden, der die Aufgabe der Benutzerschnittstelle 10 erfüllt.

In einer Ausführung des Verfahrens, in dem mindestens eine Gesundheitseigenschaft mittels einer tragbaren Benutzerschnittstelle 10 erfasst wird und zu dem Teeautomaten übertragen wird, sind die Voraussetzungen für die Bestimmung des Befindens des Nutzers und das Aufrufen entsprechender Zubereitungsparameter geschaffen.

In einer weiteren Ausführungsform des Verfahrens werden die Zubereitungsparameter für die Zubereitung eines Teegetränks in Abhängigkeit von den Gesundheitseigenschaften eingestellt. Auf diese Weise kann das auszugebende Teegetränk an die Bedürfnisse des Nutzers angepasst werden. Die Zubereitungsparameter können beispielsweise für die Ausgabe eines durstlöschenden Teegetränks eingestellt werden, wenn die Gesundheitsdaten des Nutzers eine hohe Körperaktivität und eine hohe Körpertemperatur zeigen.

Wenn eine der Gesundheitseigenschaften eine Information über die Herzfrequenz und/oder den Blutdruck ist, können durch einen Vergleich mit in einer Datenbank vorgespeicherten Schwellenwerten eine Sorte, Stärke, eine Koffeinkonzentration und/oder eine Ausgabetemperatur ausgewählt werden. Die mindesten eine Gesundheitseigenschaft kann auch eine Information über Temperatur und/oder Körperaktivität sein. Die Differenz zwischen der erfassten Körpertemperatur und der Außentemperatur kann mit einer Datenbank verglichen werden. Im Anschluss kann ein Parametersatz ausgewählt werden, der den aktuellen Außenbedingungen und dem Befinden des Nutzers entspricht.

Dank der Information über die Körperaktivität kann zum Beispiel eine Sorte ausgewählt werden. Die Auswahl der Sorte kann auch in Abhängigkeit von einer Uhrzeit erfolgen. Wenn zum Beispiel die erfasste Körperaktivität zu einer späteren Uhrzeit gering ist, liegt wahrscheinlich das Interesse des Nutzers an einem beruhigenden oder schlaffördernden Getränk. Die Auswahl der Zubereitungsparameter in Abhängigkeit von den erfassten Gesundheitsdaten und/oder von weiteren Informationen wie die Uhrzeit oder die Außentemperatur kann anhand gespeicherter Schwellenwerte erfolgen. Die Schellenwerte können in dem Teeautomaten 2 oder der Benutzerschnittstelle 10 gespeichert sein.

In einer weiteren Ausführung des Verfahrens wird mindestens ein Zubereitungsparameter von dem Teeautomaten 2 zu der Benutzerschnittstelle 10 übertragen. Dies ist in einer Ausgestaltung des Teeautomaten 2 dadurch ermöglicht, dass das Kommunikationsmodul 8 für eine bidirektionale Verbindung mit der Benutzerschnittstelle 10 eingerichtet ist. Die bidirektionale Verbindung ist in Fig. 2 mit konzentrischen Halbkreisen dargestellt, die sich entweder von dem Kommunikationsmodul 8 zu der Benutzerschnittstelle 10 oder von der Benutzerschnittstelle 10 zu dem Kommunikationsmodul 8 ausdehnen. Durch die bidirektionale Verbindung können die entsprechend der erfassten Gesundheitsdaten ausgewählten Zubereitungsparameter von dem Teeautomaten 2 zu der Benutzerschnittstelle 10 übertragen werden. Wenn die Benutzerschnittstelle 10 eine Anzeigeeinrichtung und eine Einrichtung zur Nutzereingabe aufweist, können die ausgewählten Zubereitungsparameter angezeigt und bestätigt oder abgelehnt werden. Dadurch können auch Zubereitungsparameter eingegeben und zu dem Teeautomaten 2 übertragen werden.

Die Steuereinrichtung 6 ermöglicht dann die Einstellung des Teeautomaten 2 auf den ausgewählten Zubereitungsparametersatz. Auf diese Weise kann, in einer weiteren Ausführung des Verfahrens, mindestens ein Zubereitungsparameter entsprechend einer Information über eine Temperatur, eine Körperaktivität, den Blutdruck und/oder die Herzfrequenz eingestellt werden. Dadurch wird das Befinden des Nutzers bei der Zubereitung berücksichtigt.

## Patentansprüche

1. Teeautomat eingerichtet zur automatischen Zubereitung von Teegetränken
- mit mindestens einer Brühkammer (4) und
- mit einer Steuereinrichtung (6),
**dadurch gekennzeichnet,**
- **dass** mindestens ein Kommunikationsmodul (8) zur Kommunikation mit mindestens einer tragbaren Benutzerschnittstelle (10) vorgesehen ist, wobei die Benutzerschnittstelle (10) dazu eingerichtet ist, mindestens eine Gesundheitseigenschaft mindestens eines Nutzers zu erfassen, und
- **dass** die Steuereinrichtung (6) dazu eingerichtet ist, die Einstellung von mindestens einem Zubereitungsparameter für die Zubereitung des Teegetränks in Abhängigkeit der mindestens einen erfassten Gesundheitseigenschaft zu steuern.

2. Teeautomat nach Anspruch 1,
**dadurch gekennzeichnet,**
**dass** die mindestens eine Gesundheitseigenschaft mindestens eine Information über die Herzfrequenz und/oder den Blutdruck ist.

3. Teeautomat nach Anspruch 1 oder 2,
**dadurch gekennzeichnet,**
**dass** die mindestens eine Gesundheitseigenschaft mindestens eine Information über Temperatur und/oder Körperaktivität ist.

4. Teeautomat nach einem der Ansprüche 1 bis 3,
**dadurch gekennzeichnet,**
**dass** das mindestens eine Kommunikationsmodul (8) für eine bidirektionale Verbindung mit der mindestens einen Benutzerschnittstelle (10) eingerichtet ist.

5. Verfahren zur Steuerung eines Teeautomaten, insbesondere eines Teeautomaten nach einem der Ansprüche 1 bis 4,
bei dem mindestens eine Gesundheitseigenschaft mittels einer tragbaren Benutzerschnittstelle erfasst wird und zu dem Teeautomaten übertragen wird.

6. Verfahren nach Anspruch 5,
bei dem mindestens ein Zubereitungsparameter für die Zubereitung eines Teegetränks in Abhängigkeit von der mindestens einen Gesundheitseigenschaft eingestellt wird.

7. Verfahren nach Anspruch 5 oder 6,
bei dem mindestens ein Zubereitungsparameter entsprechend einer Information über eine Temperatur, eine Körperaktivität, den Blutdruck und/oder die Herzfrequenz eingestellt wird.

8. Verfahren nach einem der Ansprüche 5 bis 7,
bei dem mindestens ein Zubereitungsparameter von dem Teeautomaten zu der Benutzerschnittstelle übertragen wird.
